# EUROPÄISCHE PATENTSCHRIFT

(11) **EP 2 252 921 B1**
(45) Veröffentlichungstag und Bekanntmachung des Hinweises auf die Patenterteilung: **29.07.2015**
(21) Anmeldenummer: 09716236.6
(22) Anmeldetag: 09.03.2009
(51) Int. Cl.: G05B 19/418, G05B 13/02

(54) **VERFAHREN ZUM EINSTELLEN EINES PARAMETERS, EINER MECHANISCHEN MASCHINENEINSTELLUNG UND VON HEIZEINRICHTUNGEN, ZUM VERWENDEN EINER VAKUUMFORMANLAGE UND ZUM HERSTELLEN VON PRODUKTEN SOWIE ANLAGE UND PRODUKT**
METHOD FOR SETTING A PARAMETER OF A MECHANICAL MACHINE SETTING AND OF HEATING DEVICES FOR USE OF A VACUUM FORMING MACHINE AND FOR THE MANUFACTURE OF PRODUCTS, AND MACHINE AND PRODUCT
PROCÉDÉ DE RÉGLAGE D'UN PARAMÈTRE, DE RÉGLAGE MÉCANIQUE DE LA MACHINE ET DE DISPOSITIFS DE CHAUFFAGE, D'UTILISATION D'UNE INSTALLATION DE FORMAGE SOUS VIDE ET DE FABRICATION DE PRODUITS, AINSI QU'INSTALLATION ET PRODUIT

(30) Priorität: 07.03.2008 DE 102008013193; 24.06.2008 DE 102008029674
(43) Veröffentlichungstag der Anmeldung: 24.11.2010
(60) Teilanmeldung: 15001751.5
(73) Patentinhaber: Kiefel GmbH, 83395 Freilassing (DE)
(72) Erfinder: HUBER, Anton, A-5301 Eugendorf (AT); KAMML, Dieter, 83404 Ainring (DE)
(74) Vertreter: Farago, Peter Andreas
(86) Internationale Anmeldenummer: PCT/DE2009/000301
(87) Internationale Veröffentlichungsnummer: WO 2009/109178

(56) Entgegenhaltungen:
- DE-B4-102006 006 176
- US-A- 4 146 601
- US-A1- 2003 028 279
- G. GAUTHIER - B. BOULET: "Terminal Iterative Learning Control Applied to Thermoforming Machine Reheat Phase" IEEExplore IEEE ISIE 2006 9. Juli 2006 (2006-07-09), Seiten 353-357, XP002533612 Montréal, Quebec, Canada Gefunden im Internet: URL:http://ieeexplore.ieee.org/stamp/stamp .jsp?tp=&arnumber=4077950&isnumber=4077881 > [gefunden am 2009-06-23]

## Beschreibung

Die Erfindung betrifft ein Verfahren zum Einstellen eines Parameters, einer mechanischen Maschineneinstellung, von Heizeinrichtungen, zum Verwenden einer Vakuumformanlage und zum Herstellen von Produkten sowie eine kunststoffverarbeitende Anlage und ein Kunststoffprodukt.

Kunststoffverarbeitende Anlagen sind in vielfacher Hinsicht bekannt. Die Kunststoffprodukte, welche aus solchen Anlagen hervorgehen, sind unter viel anderem in der Automobil-, Kühlschrank-, Medizintechnik- und Verpackungsindustrie zu finden. Als Anlagen selbst sind beispielsweise Folien-Reckanlagen, Flachfolien-Extrusionsanlagen, SchlauchfolienExtrusionsanlagen, Folienwickelmaschinen, Vakuumformanlagen, Kaschieranlagen, Thermoformanlagen, Medizinbeutelanlagen, Druckluftformautomaten, Schweißautomaten, Schiebetischanlagen und Drehtischanlagen bekannt.

Beim Einrichten und Anfahren einer kunststoffverarbeitenden Anlage müssen oft mehrere hundert Parameter eingestellt werden. Eine beispielhafte Anlage, welche der Anmelderin bekannt ist, erfordert zwischen 400 und 440 Parametern.

In der Praxis ist eine Bedienperson allerdings oft schlecht geschult. So kommt es immer öfter vor, dass statt speziell ausgebildeten Kunststofftechnikern universell einsetzbare Schlosser zum Anfahren und Betreiben der Maschinen eingesetzt werden.

Das Anfahren einer solchen Anlage dauert meist ein bis zwei volle Arbeitstage.

Ziel der Parametereinstellung ist es, Produkte zu erzeugen, welche den Qualitätsanforderungen genügen. Gleichzeitig ist übliches Ziel der Parametereinstellung ein möglichst hoher Durchsatz.

Zum Optimieren der Taktzeiten schlägt die DE 10 2006 006 176 B4 ein Verfahren vor, bei welchem zunächst alle Geometrien der Anlage und der Werkstücke erfasst werden. Daraufhin wird der gesamte Bearbeitungsablauf, insbesondere die Verfahrwege so errechnet, dass sich eine ideal kurze Taktzeit ergibt.

Andere Verfahren sind aus der DE 101 52 891 B4 und aus der DE 102 09 650 C1 bekannt.

Schließlich ist ein herkömmliches manuelles Verfahren bekannt, bei welchem die Bedienperson anhand des resultierenden Produkts durch seine Erfahrung versucht, einzelne Parameter so einzustellen, dass sich eine gute Qualität bei gutem Durchsatz ergibt. Die US 4146601 beschreibt eine Spritzgussanlage, bei welcher die Kraft über den Weg beim Einspritzvorgang integriert wird. Dieses Maß soll als ein neuartiger Index verwendet werden. Anhand dieses Maßes werden verschiedene Iterationen durchgeführt, um die Produktqualitäten in einem vorgegebenen Maß zu hatten.

Der Erfindung liegt die Aufgabe zu Grunde, verbesserte Verfahren und Anlagen bereit zu stellen.

Nach einem ersten Aspekt der Erfindung löst diese Aufgabe ein Verfahren zum Einstellen eines Parameters an einer kunststoffverarbeitenden Anlage, wobei eine Produktionseinstellung des Parameters über einen in und/oder von der Anlage ermitteltem Messwert iterativ ermittelt wird.

Begrifflich sei hierzu erläutert, dass im Rahmen der hier vorliegenden Patentanmeldung zwar durchgehend von nur "einem Parameter" gesprochen wird. Es versteht sich allerdings, dass die Erfindung nicht nur vorteilhaft auf unterschiedlichste Parameter angewendet werden kann, sondern dass sich gerade bei Anwendung der Erfindung auf mehrere Parameter eines Anlagenvorgangs ein besonders großer Vorteil ergibt.

Unter einer "Produktionseinstellung" des Parameters sei eine solche Einstellung verstanden, also ein solcher eingestellter Wert, dass die Produktion mit dieser Einstellung gefahren werden kann. Dieser Wert kann normalerweise innerhalb einer gewissen Bandbreite liegen. Insbesondere kann sich ein Parameter mit einem anderen Parameter wechselwirkend beeinflussen, so dass eine optimale Produktiotiseinstellung des Parameters - und zwar optimal beispielsweise mit Blick auf die Produktqualität - bei Veränderung des anderen Parameters ebenfalls einen anderen erforderlichen Wert annehmen kann.

Daher ist es beispielsweise denkbar, dass die Einstellung des Produktionsparameters im Laufe der Zeit geändert werden soll, weil beispielsweise die Maschine Verschleißteile hat oder weil sie beispielsweise im Laufe der Produktion wärmer oder kälter wird.

Als der Produktionsparameter sei daher insbesondere ein zumindest temporär Qualitäts-optimaler eingestellter Wert aufzufassen.

Die "iterative Ermittlung" der hier vorgeschlagenen Art bringt gegenüber dem Stand der Technik ganz erhebliche Vorteile:

Das in der DE 10 2006 006 176 B4 vorgeschlagene Verfahren erfordert nämlich schon eine umfassende Eingabe sämtlicher relevanter Faktoren, insbesondere der gesamten Maschinen-, Werkzeug- und Werkstückgeometrie. Dies kann sich in der Praxis als äußerst aufwändig erweisen.

Überdies ist in diesem vorbekannten Stand der Technik das Augenmerk darauf gelegt, den Produktionszyklus zu minimieren, also den Durchsatz zu maximieren. Die Qualität bleibt hierbei je nach Anlage mitunter auf der Strecke. Es ist leicht vorstellbar, dass beispielsweise mit einer gewissen Verweildauer im Werkzeug ebenfalls eine erforderliche Mindestqualität zwar erreicht werden kann, dass aber bei vielleicht nur geringfügiger Verlängerung der Verweilzeit im Werkzeug die Qualität mitunter ganz erheblich gesteigert werden kann.

Das hier beschriebene Verfahren geht daher deutlich weiter als das in der DE 10 2006 006 176 B4 beschriebene Verfahren, indem es den Fokus nicht notwendigerweise nur auf den möglichst hohen Durchsatz lenkt, sondern ganz überwiegend dafür gewinnbringend eingesetzt werden kann, die Qualität des resultierenden Produktes zu optimieren.

Auch falls im Einzelfall jedoch nur die Durchlaufzeit optimiert werden soll, bringt das hier beschriebene Verfahren jedoch erhebliche Vorteile, weil es nicht notwendig ist, die gesamte Anlage analytisch zu erfassen. Vielmehr kann bereits mit einigen erfassten Angaben und einigen Erfahrungswerten gut durchgearbeitet werden.

Selbst gegenüber dem bekannten Verfahren, dass die Bedienperson die resultierenden Produkte begutachtet und manuell die Parameter ändert, ergibt sich ein großer Vorteil: Zum einen können von der Anlage Messwerte innerhalb der Anlage erfasst werden, also in Bereichen, zu welchen die Bedienperson bei laufender Produktion keinen Zugriff hat. Zum anderen kann die Anlage selbst idealerweise auf eine gespeicherte Expertendatenbank in der Anlage selbst oder in einem elektronischem Netzwerk zurückgreifen, worin festgehalten ist, welche Qualitätsschwächen im Endprodukt durch welche Parameter behoben werden können.

Bevorzugt wird ein in einer Anlagensteuerung vorgesehener Versuchsplan verwendet. In einem solchen Versuchsplan kann einerseits gespeichert sein, welche Versuche beim Anfahren der Anlage und/oder während der laufenden Produktion überhaupt vorgenommen werden, also insbesondere welche Parameter verändert werden. Gleichzeitig kann ein plausibler Anfangswert in einem solchen Versuchsplan gespeichert sein. Alternativ oder kumulativ kann ein Anfangswert für die Iteration entweder von der Bedienperson eingegeben werden oder mittels eines teach-in-Verfahrens von der Bedienperson mit der Anlage ermittelt werden. Bei einem teach-in-Verfahren fährt die Bedienperson bestimmte Anlagebewegungen zunächst mit manuellem Vorschub bis zu ungefähren Endpositionen oder Verweildauern. Die Anlage potokolliert diese Bewegungen und nimmt diese als Startparameter für die Iteration.

Es wird vorgeschlagen, dass nach einer Möglichkeit der Parameter beim iterativen Ermitteln selbstständig durch eine Anlagensteuerung variiert wird. Bei einer solchen Ausführungsform des Verfahrens beziehungsweise einer entsprechenden Anlage greift die Anlagensteuerung in die Maschinenparaineter ein und variiert diese. Sie kann die Resultate am Produkt entweder selbst messen oder eine Bedienperson zu einem Dialog auffordern, insbesondere zur Entscheidung auffordern, welches von zwei unterschiedlich hergestellten Produkten qualitativ besser ist.

Alternativ oder im Falle mehrerer Parameter kumulativ ist denkbar, dass der Parameter beim iterativen Ermitteln einer Bedienperson vorgeschlagen wird. In diesem Fall gibt entweder die Anlage der Bedienperson vor, welchen Parameter die Bedienperson ändern soll, beispielsweise eine Transportbreite von Transportschienen, oder die Bedienperson macht Vorschläge, welcher Parameter zu ändern ist, und die Anlage selbst ändert den Parameter.

Bei sämtlichen angedachten Varianten ist es von Vorteil, einen Foliendurchhang bei einer Berechnung zu berücksichtigen. So ist davon auszugehen, dass eine Kunststofffolie in der Anlage einen verstärkten Durchhang einnimmt. Im Zugriff zur Anlage ist zwar rein mathematisch-physikalisch immer ein Durchhang vorhanden. Durch eine Spreizung im transportierten Bereich kann ein solcher Durchhang jedoch reduziert oder sogar weitgehend ausgeglichen werden.

In der Anlage selbst nimmt der Durchhang allerdings oft zu, sei es infolge von Erwärmung der Folie im Inneren der Anlage, sei es infolge einer Kraft, welche die Lüfter auf die Folie ausüben.

Der hier vorgeschlagene Aspekt der Erfindung hat erkannt, dass die Durchhängung der Folie von großer Relevanz für die Formbarkeit sein kann. Es wird daher einerseits vorgeschlagen, den Durchhang als solchen überhaupt in der Berechnung zu berücksichtigen. Andererseits wird vorgeschlagen, bei geeigneter Erfassbarkeit die zu erwartende Durchhängung über den Transportverlauf der Folie durch die Anlage hindurch örtlich variabel in der Berechnung zu erfassen, also beispielsweise erhöhten Durchhang infolge von Temperaturerhöhungen mit zu berücksichtigen.

Es ist denkbar, dass eine zu erreichende Qualitätszielgröße fest vorgegeben ist. Dies kann beispielsweise die Qualität der Gratfreiheit sein, die Lichtdurchlässigkeit einer Schweißnaht, die Zugfestigkeit zweier verbundener Teile oder zahlloser weitere Parameter. Insbesondere können sicherheitsrelevante oder von Kunden besonders stark beachtete Qualitätszielgrößen hier aufgenommen sein.

Alternativ oder bei mehreren Parametern kumulativ denkbar ist es, dass eine zu erreichende Qualitätszielgröße von einer Bedienperson eingegeben wird.

Von besonderem Vorteil ist es, wenn beim iterativen Ermitteln des Parameters eine Qualitätszielgröße von einer Bedienperson bewertet wird. Dies erfordert zwar einen menschlichen Eingriff beziehungsweise eine menschliche Interaktion. Die Anlagensteuerung kann der Bedienperson allerdings recht genau vorgeben, anhand welcher Kriterien welche Qualitätszielgrößen zu bewerten sind. Die Anlagensteuerung kann auf diese Weise ein Feedback zur Produktqualität erhalten, auch zu der erreichten Qualität von bestimmten Qualitätszielgrößen, welche maschinell nur schwer zu erfassen sind.

Anhand einer bewerteten Qualitätszielgröße, sei es anhand einer maschinell oder manuell bewerteten Qualitätszielgröße, wird bevorzugt ein optimierter Datensatz errechnet. Ein solcher Datensatz enthält mehrere Parameter der Anlage, bevorzugt alle einstellbaren Parameter der Anlage.

Bevorzugt wird eine Maschinenbewegung durch die Iteration optimiert. Hinsichtlich der Maschinenbewegung kann insbesondere in Betracht kommen, dass die Formzeit, die Anpresskraft und/oder die Standzeit durch die Iteration optimiert werden.

In einer weiteren erfinderischen Idee ist der durch die Iteration zu optimierende Parameter ein Überdruck von Pressluft. Dies kann an vielen Stellen in einer kunststoffverarbeitenden Anlage der Fall sein. Nach einem besonders vorteilhaften Aspekt ist dies jedoch in folgender Anwendung der Fall: Vakuumformanlagen verfügen über eine Werkzeugmulde für das zu erstellende Produkt. Im Normalfall werden ein Oberwerkzeug und ein Unterwerkzeug zusammen gefahren. Durch Anlagen von Vakuum und eine zwischen den beiden Werkzeugteilen liegende Kunststofffolie wird das endgültige Produkt tiefgezogen.

Es kann jedoch wünschenswert sein, die selben Werkzeuge mit Druckluft zum Formen von Kunststoffprodukten zu verwenden. So ist es oft empfehlenswert, beim Formen von Polypropylen die Kunststofffolie von der später hohlen Seite aus mit Druckluft zu beaufschlagen, weil ansonsten oft qualitativ unzureichende Ecken bei der Ausformung entstehen.

Problematisch ist hierbei, dass die Druckluft mit großem Überdruck eingeblasen werden kann. Ein Vakuumformwerkzeug ist hingegen nur auf eine relativ geringe Schließkraft ausgelegt, weil bei Anlegen von Unterdruck im Inneren der Werkzeugform die Schließkraft ohnehin zusätzlich erhöht wird. Wenn Überdruck im Inneren erzeugt wird, besteht leicht die Gefahr, dass der Überdruck aus den beiden gegeneinander gefahrenen Werkzeugteilen ausweicht. Dies kann die Produktqualität negativ beeinflussen oder sogar gefährlich für die Anlage oder für Bedienpersonen sein.

Es ist daher ratsam, die Stärke des Überdrucks durch die Iteration zu optimieren, so dass es nicht zu einem Austritt oder jedenfalls nicht zu einem übermäßigen Austritt von Druckluft aus dem Werkzeug hinaus kommt.

Unabhängig davon, für welchen Parameter eine Iteration durchgeführt wird oder welcher Parameter anderweitig ermittelt werden soll, wird vorgeschlagen, dass ein statistischer Versuchsplan verwendet wird, insbesondere ein Versuchsplan nach Taguchi. Ein statistischer Versuchsplan optimiert mit Hilfe statistischer Überlegungen die Anzahl der durchzuführenden Versuche für eine Parameterstudie. Üblicherweise wird für eine Parameterstudie jeweils ein Parameter in unterschiedliche Richtungen und mit mehreren Messpunkten verändert, um zunächst den jeweils Individuelleinfluss des Parameters auf das Produktergebnis zu ermitteln. In fortgeschrittenen Stufen wird die Zusammenwirkung beziehungsweise die gegenseitige Beeinflussung verschiedener Parameter untersucht. Es sind also für eine Parameterstudie mehr Versuche notwendig als Parameter zu untersuchen sind.

Ein "statistischer Versuchsplan" hingegen mindert die Anzahl der durchzuführenden Versuche ganz erheblich und kommt hierbei zu erstaunlich guten Ergebnissen.

Als Beispiel ist denkbar, dass für vier beeinflussende Parameter nur acht Versuche durchgeführt werden müssen, um mit einer statistisch sehr hohen Wahrscheinlichkeit sämtliche Wechselwirkungen zu erfassen. Es kann also eine gemeinsame Optimierung der wechselwirkenden Werte sehr schnell und leicht erreicht werden.

Bevorzugt geschieht eine Optimierung der Parameter über statistische Versuchspläne für sich gegenseitig beeinflussende Größen, während eine iterative Ermittlung einzelner Parameter bevorzugt für Größen durchgeführt wird, welche keine Wechselwirkung miteinander haben.

Taguchi-Versuchspläne sind über mathematische orthogonale Felder zu erreichen. Diese sind in Nachschlagewerken vertafelt, beispielsweise in D. C. Montgomery: Design and analysis of experiments. John Wiley & Sons, New York, 1991, ISBN 0-471-52994-X, Seiten 421 f.

Nach einem zweiten, unabhängigen Aspekt der Erfindung löst die gestellte Aufgabe ein Verfahren zum Einstellen eines Parameters an einer kunststoffverarbeitenden Anlage, wobei in einem ersten Schritt eine Parametereingabe erfolgt, woraufhin in späteren Schritten zunächst ein Trockenlauf von Anlagenteilen, dann ein Anfahren in einem Sparmodus und schließlich ein Fahren der Anlage in einem Produktionsmodus durchgeführt werden.

Begrifflich sei hinsichtlich dieses Aspekts der Erfindung erläutert, dass dies nicht notwendigerweise die einzigen Schritte sein müssen, welche zum Einstellen beziehungsweise Anfahren oder Fahren der Anlage durchgeführt werden. Vielmehr ist es lediglich von Vorteil, diese Schritte durchzuführen, wobei in besonders bevorzugter Ausführungsform des Verfahrens lediglich diese Schritte durchgeführt werden.

In der "Parametereingabe" gibt die Bedienperson einige Parameter ein, oder diese werden anhand von voreingespeicherten üblichen Parametersätzen eingelesen. Beispielsweise können sie auch vom Produkt selbst direkt erkannt werden. Hierzu gehören Parameter wie prinzipielle Folieneigenschaften, Werkzeugeigenschaften, die Auswahl einer Positivformung oder einer Negativformung sowie Angaben dazu, ob lediglich geformt werden soll, ob beispielsweise geformt und separat gestanzt werden soll oder ob gleichzeitig geformt und gestanzt werden soll sowie schließlich Angaben zur Stapelung der Produkte, jeweils im Falle einer Kunststoffformanlage.

Anschließend kann die Anlage ihre eigenen Parameter erstellen.

Im anschließenden "Trockenlauf" können beispielsweise die Funktionsfähigkeit der Fahrwege oder eine maximale oder minimale Taktzahl ermittelt werden. Dies jeweils ohne Materialverbrauch, weil im Trockenlauf die Folie oder der anderweitig zugeführte Kunststoff noch nicht verbraucht werden soll.

Im Anfahren der Anlage im "Sparmodus" wird zwar Folie oder anderweitig zugeführter Kunststoff verbraucht. Die Anlage wird jedoch in einem sehr niedrigen Takt gefahren, so dass nicht nur Material während des Anfahrens eingespart wird, sondern dass auch die Bedienperson gut erkennen kann, ob sämtliche Funktionen einwandfrei laufen.

Erst beim Fahren der Anlage im "Produktionsmodus" wird dauerhaft die gewünschte Taktzahl gestartet.

Selbst während des Fahrens der Anlage im Produktionsmodus wird jedoch bevorzugt eine Optimierung der Parameter durchgeführt, bevorzugt über einen statistischen Versuchsplan.

Anschließend kann die Anlage mit hervorragender Qualität dauerhaft laufen.

Es hat sich herausgestellt, dass das Anfahren der Maschine auf diese Weise besonders schnell und einfach sowie betriebssicher durchgeführt werden kann.

Insbesondere gilt dies in Verbindung mit dem auch unabhängig vorteilhaften dritten Aspekt der Erfindung, nämlich einem Verfahren zum Einstellen einer mechanischen Maschineneinstellung an einer kunststoffverarbeitenden Anlage, bei welchem die Anlage die Maschineneinstellung anhand eines Parameters selbsttätig vornimmt.

Wenn die Anlage alle Anlagenteile automatisch einstellt, z. B. die Bandbreite der Kettenschiene, kann die Anlage nach etwa 20 min bereits angefahren werden. Hingegen braucht bei herkömmlichen Anlagen ein sehr geübter Bediener etwa zwei Stunden, im Normalfall benötigt ein durchschnittlich geübter Bediener um die vier Stunden.

Vor dem Anlaufen sollte die Anlage eine Sicherheitsbestätigung der Bedienperson einholen.

Eine der Maschineneinstellungen kann die Spreizung sein. Wobei diese bevorzugt an mehreren Stellen unabhängig selbsttätig eingestellt wird.

Nach einem vierten Aspekt der vorliegenden Erfindung löst die gestellte Aufgabe ein Verfahren zum Einstellen von Heizeinrichtungen an einer kunststoffverarbeitenden Anlage, wobei die Heizeinrichtungen dazu vorgesehen sind, den Kunststoff während eines Arbeitsschritts zur Herstellung eines Endprodukts zu erwärmen, wobei Produktionseinstellungen der Heizeiririchtungen errechnet werden, und zwar anhand einer zu erwartenden Wärmeimmission.

Der entscheidende Gedanke hierbei ist, dass die Wärmeimmission errechnet wird. Diese ergibt sich aus der Summe über alle Wärmestrahler beziehungsweise aus der Summe einer Funktion über alle Strahler, wobei die Funktion, die Entfernung, den Strahlwinkel und die Strahlleistung des Wärmestrahlers berücksichtig werden.

Die Berechnung aus der Immission anstelle der Emission ist ein völlig neuer Ansatz im Bereich solcher Anlagen.

. Es wurde bereits erläutert, dass eine Produktseinstellung eines Parameters bevorzugt über einen statistischen Versuchsplan ermittelt werden kann. Dies ist nach einem fünften Aspekt der hier vorliegenden Erfindung auch unabhängig von sämtlichen übrigen vorgestellten Aspekten von Vorteil.

Besonders bevorzugt sind Versuchspläne nach Taguchi.

Nach einem sechsten Aspekt der hier vorliegenden Erfindung löst die gestellte Aufgabe ein Verfahren zum Einstellen eines Parameters an einer kunststoffverarbeitenden Anlage und zum Anfahren der Anlage, wobei vor dem Anfahren eine Sicherheitsbestätigung von einer Bedienperson eingeholt wird.

Dies kann beispielsweise helfen, Gefahren zu beheben, welche von Zahlendrehern bei der Eingabe oder ähnlichen Fehlern hervorgerufen würden.

Nach einem siebten Aspekt der hier vorliegenden Erfindung löst die gestellte Aufgabe ein Verfahren zum Verwenden einer Vakuumformanlage mit einem Überdruck, wobei zunächst anhand einer Formgröße und einer Anlagenkraft ein zulässiger Wert des Überdrucks ermittelt wird.

Dieser Gedanke wurde vorstehend bereits erläutert. Er ist auch unabhängig von den übrigen vorgestellten Aspekten von Vorteil.

Es versteht sich, dass ein Verfahren zum Herstellen von Produkten mit einer kunststoffverarbeitenden Anlage besonders vorteilhaft ist, wenn mindestens eines der vorstehend beschriebenen Verfahren einbezogen wird.

Denkbar als Herstellungsprozess sind insbesondere Kunststofffügeprozesse, Thermoformprozesse, Hochfrequenzschweißprozesse, Thermokontaktschweißprozesse und weitere Prozesse, welche im Rahmen von gattungsgemäßen Anlagen durchgeführt werden können.

Um die Qualität des resultierenden Produkts zu optimieren, wird es oft von Vorteil sein, wenn der Parameter iterativ und/oder über einen statistischen Versuchsplan so eingestellt wird, dass sich eine Zykluszeit ergibt, welche größer ist als eine minimal mögliche Zykluszeit, welche aber eine bessere Produktqualität ergibt.

Alternativ oder im Idealfall gleichzeitig kann vorgesehen sein, dass der Parameter oder die Parameter so eingestellt werden, dass sich eine minimal mögliche Zykluszeit ergibt.

Es versteht sich, dass eine kunststoffverarbeitende Anlage mit einer Steuerung zum Durchführen mindestens eines Verfahrens gemäß der vorstehenden Beschreibung unmittelbar von den Vorteilen des Verfahrens ebenfalls profitiert. Gleiches gilt für ein resultierendes Kunststoffprodukt.

Die Erfindung wird nachstehend anhand von Ausführungsbeispielen weiter erläutert:

Zur Inbetriebnahme einer Thermoformanlage mit einer neuen Folie gibt eine Bedienperson zunächst Parameter ein, welche die Anlage selbst nicht ertasten kann (erster Schritt, hier "Block A" genannt).

Die Bedienperson macht Eingaben über die Folieneigenschaften, über die Werkzeugeigenschaften, über die gewählte Formungsart (Positivformung oder Negativformung), über die Produkteigenschaften, über den Prozess, über die Bearbeitungsschritte (Formen, Formen mit separatem Stanzen oder Formen mit Stanzen), über die Stapelung, über die vorhandenen Schächte und gegebenenfalls über weitere Daten. Hinsichtlich der Folieneigenschaften ist insbesondere denkbar, dass die Folienart eingegeben wird, also insbesondere das Herstellmaterial der Folie, die Folienbreite und die Folienstärke. Hinsichtlich der Werkzeugeigenschaften sei insbesondere daran gedacht, die Länge in Folienlaufrichtung mit Spannrahmen, die Breite quer zur Folienlaufrichtung mit Spannrahmen und das Blockmaß des Werkzeugs anzugeben.

Anstelle jedoch - wie bei herkömmlichen Verfahren bekannt - zahllose weitere Parameter einzugeben, führt die Anlage schon hier sehr schnell mit einem bedienergeführten Vorschlagsprogramm zur Qualitätsoptimierung.

Im nächsten Schritt wird ein Parametersatz für die Anlage erstellt (Block B):

Hinsichtlich der Heizung wird zunächst definiert, welche Heizkörper zur Verfügung stehen. Anschließend werden diesbezügliche Zonen errechnet und in einen Berechnungsalgorithmus gegeben. Die Gesamtfeldanpassung der Heizung wird vektorisiert, und der Datensatz wird anschließend aktiviert.

Anschließend wird die Formstation in die Produktionsstellung gefahren. Dies geschieht insbesondere mit Blick auf die Kettenschiene, die Tische, die vorhandenen Blockmaße, die Spannrahmen, das Joch und die Position der Stanzstation.

An dieser Stelle wird eine Optimierungsschleife für die Formstation durchlaufen.

Nach der Optimierungsschleife für die Formstation wird eine Optimierungsschleife für die Stapelstation durchlaufen. Diese fährt zunächst in Position. Die erforderlichen Werte werden definiert. Die Position des Ausdrückers wird überprüft: Die Drehmomente werden iterativ gemessen und eingestellt. Zum besseren Händling an der Entnahme wird über ein teach-in-Verfahren die ideale Position ermittelt. Diese Position wird anschließend gespeichert.

Damit ist der Block B abgeschlossen.

Sehr gut denkbar ist außerdem, dass für das Servomoment eine Optimierungsschleife durchlaufen wird. Bei einem teach-in-Verfahren an dieser Stelle wird beispielsweise der Ausdrücker verfahren und die Fahrstrecke ausgemessen. Andere Werkzeuge können beispielsweise bis zum Anschlag verfahren werden. Im Falle des Ausdrückers hingegen drückt der Servo den Ausdrücker nach oben. Der Servo wird also gesteigert, bis er fahren kann. Das gemessene Servomoment wird bevorzugt mit einem Sicherheitsbeiwert multipliziert, beispielsweise mit 1,5. Mit diesem Wert kann als Erfahrungswert die Optimierungsschleife begonnen werden.

Ein Erfahrungswert, mit welchem eine Optimierungsschleife begonnen wird, kann entweder ein Fixwert sein oder sich als Funktion aus diversen Parametern ergeben, wobei diesbezüglich Produktparameter, Maschinenparameter und/oder Prozessparameter in Frage kommen.

Beispielsweise ist ein Erfahrungswert für die erforderliche Formzeit als Funktion insbesondere der Folienstärke, der Folienart, der Ziehtiefe, der Werkzeug-Wärmeleitfähigkeit und der Kühlwassertemperatur zur ermitteln. Auch hier ist mit der Summe aus 1 und einem Sicherheitsbeiwert zu multiplizieren. Es kann sich beispielsweise der Wert ergeben, dass die Formzeit 0,26 Sekunden als Erfahrungswert betragen sollte.

Von diesem Ausgangswert in Höhe von 0,26 Sekunden Formzeit kann anschließend mit einer Iteration die Optimierung begonnen werden.

Im nächsten Schritt (Block C) wird ein Trockenlauf durchgeführt.

In diesem Block werden beispielsweise Optimierungsschleifen für die Fahrwege durchlaufen.

Im dritten Block, dem Trockenlauf, wird nun ohne Folie und somit ohne Materialverbrauch der Ablauf getestet und optimiert.

In einem ersten Blockteil (Schritt C.a) wird zunächst als erste Iteration mit einem willkürlichen, sehr langsamen Ablauf begonnen. Gewählt wird der langsamste Ablauf, der zu einem funktionsfähigen Ablauf führt, aber nicht zu langsam ist. Beispielsweise ist es bei einer Thermoform- und Stanzanlage denkbar, mit einer Geschwindigkeit von 20 Takten pro Minute zu beginnen.

Diese Taktgeschwindigkeit kann beispielsweise die schnellste Zeitgeschwindigkeit sein, die bei den meisten Folien noch funktioniert.

Während der ersten Iteration wird die Fahrwegzeit eines Taktes gemessen. Da bei einer Geschwindigkeit von 20 Takten pro Minute für jeden Takt drei Sekunden Zeit vorhanden sind, ergibt sich die Restzeit zwischen der Fahrwegzeit und den drei Sekunden als die mögliche zur Verfügung stehende Zeit für Stehzeit und Formzeit. Es wird nun auf Stehzeit und Formzeit aufgeteilt und laufen gelassen, bis die drei Sekunden zusammen in einem Takt exakt als Resultat herauskommen.

Der Ablauf ist nun extrem stabil. Die Maschine läuft nicht Gefahr, sich in Schwingungen zu versetzen.

Im nächsten Blockteil (Schritt C.b) wird die Anlage auf Maxtakte gebracht, also auf die maximal mögliche Taktzahl.

Dies wird bevorzugt dergestalt ausgeführt, dass die Standzeit auf die minimale Standzeit gebracht wird. Die erreichte Taktzahl wird sodann gemessen und rückwärts gerechnet.

Im ersten Ansatz wird hierzu einfach die Stehzeit auf den vorausgerechneten Wert reduziert. Zum Beispiel wurde vorstehend erläutert, dass die minimale Formzeit auf den Erfahrungswert in Höhe von 0,26 Sekunden gesetzt werden kann.

Nun wird sowohl bei der niedrigen Geschwindigkeit von 20 Takten pro Minute als auch bei Maxtakte, beispielsweise bei 36 Takten pro Minute, jeweils eine Iteration zum Ermitteln bestmöglicher Fahr- und Standzeiten durchgeführt (Schritt C.c).

Anschließend wird in einem vierten Blockschritt (Schritt C.d) eine Abspeicherung der beiden Parametersätze vorgenommen.

Dies schließt den Trockenlauf ab.

In einem vierten Block des Anfahrprozesses (Block D) erfolgt ein Anfahren der Anlage mit Folie und somit eine Optimierung im Sparmodus.

Hier können beispielsweise Optimierungsschleifen für das Heizungsgesamtfeld, für die Stanzkraft, für die Schließkraft oder für das Stapeln durchlaufen werden.

So kann beispielsweise nach einem Vorbereiten der Anlage diese automatisch mit einem Takt von 20 Takten pro Minute starten. Nachdem die vorstehend genannten Größen im Foliensparmodus optimiert wurden, kann eine Kennfeldanpassung der Heizung vorgenommen werden. Die Heizung kann anschließend auf maximale Werte erhöht werden.

Im Detail kann die Anlage also beispielsweise bei einer Geschwindigkeit von 20 Takten pro Minute anlaufen. Im vorstehend genannten Beispiel ist bei einer solchen Taktung nur die Standzeit unnötig lang.

Alles, was nicht formqualitätrelevant ist, kann demnach bei 20 Takten pro Minute iterativ optimiert werden.

Diese vielen Parameter können also optimiert werden, ohne dass übermäßig viel Folie verbraucht wird.

Im letzten Block (Block E) wird die Produktoptimierung durchgeführt, also eine Optimierung im Produktionsmodus.

Hier können beispielsweise Optimierungsschleifen für einzelne Heizkörper oder Strahler durchlaufen werden, die Formhaltigkeit des Bodens, die Position von Kühlplatten, die Wandstärkenverteilung, Stanzparameter, etc..

Sobald die Anlage in maximaler Taktung läuft, kann per Iteration eine Optimierung erfolgen. Durch die Feedback-Werte bei der niedrigen Geschwindigkeit von 20 Takten pro Minute ist es bereits möglich, die Kennkurven auf die realistisch benötigten Werte zu verschieben. Beim Beginn des Laufs mit maximaler Taktung sind daher die Werte der Parameter schon recht nahe am Optimum.

Für jeden Parameter kann eine Regelkurve vorgegeben sein, anhand welche sich die Anlage an den optimalen Wert herantastet. So lange der Parameter in Bereichen der Regelkurve ist, wo er vom Optimum noch weiter entfernt ist, können große Iterationsschritte gefahren werden. Sobald eine Regelkurve erkennbar wird, dass sich die Iteration einem Optimum nähert, beispielsweise durch Annähern an ein Maximum auf einer Kurve, können kleine Iterationsschritte gefahren werden.

Beispielsweise kann sich im Block D, also im Foliensparmodus, ergeben, dass bei einer Geschwindigkeit von 20 Takten pro Minute und einer Foliendicke von 0,3 mm eine Temperatur von 78 Prozent (beispielsweise ungefähr 140 °C entsprechend) statt der laut Kennkurve erwarteten 74 Prozent nötig ist, um das Produkt mit einer idealen Qualität herzustellen. Die Temperatur musste also um plus 4 Prozent-Punkte nach oben korrigiert werden.

Für den Block E kann hieraus beispielsweise die Schlussfolgerung gezogen werden, dass bei einer Foliendicke von 0,3 mm und bei maximaler Taktung (z. B. 38 Takte pro Minute) die Kennkurve um plus 6 Prozent-Punkte erhöht werden muss.

Es versteht sich, dass die Optimierung dieser Werte möglichst schnell erfolgen sollte, weil der Folienverbrauch in diesem Zustand sehr hoch ist.

Unabhängig von der Alternative der iterativen Anpassung eines Wertes, der keine Wechselwirkung hat, beispielsweise mit Feedback vom Benutzer, kann im Block E ein statistischer Versuchsplan durchlaufen werden. Dies macht vor allem dann Sinn, wenn ein Wert angepasst werden soll, welcher Wechselwirkungen hat, und zwar über eine gemeinsame Optimierung der wechselwirkenden Werte.

Bei einem Versuchsplan nach Taguchi ist es beispielsweise denkbar, dass nur acht Versuche für vier beeinflussende Parameter nötig sind.

Nach Möglichkeit sollten Wechselwirkungen aus logischen Gründen bereits gezielt ausgeschlossen werden, soweit dies im Einzelfall möglich ist.

Der ermittelte Parametersatz wird anschließend gespeichert.

In einem zweiten, sehr konkreten Beispiel wird im Detail die Optimierung einer Ausdrückerstation beschrieben:

Bei der Ausdrückerstation bewegt ein Servomotor die Ausdrücker vertikal durch eine Folie. Die im Restgitter leicht haftenden Nutzen werden ausgedrückt und der Stapelung zugefügt.

Das Drehmoment des Servos und damit die Kraft des Ausdrückers muss jedoch so gewählt werden, dass sie geringfügig über dem Kraftbedarf eines korrekt gestanzten Nutzens liegen. Dies stellt eine Schutzmaßnahme für die Anlage dar. Ist der Nutzen nicht korrekt gestanzt und das Drehmoment zu groß, würde über die Folie eine hohe Spannung aufgebaut. Diese könnte die Anlage beschädigen.

Das benötigte Drehmoment ist abhängig von dem verwendeten Servomotor und dem verwendeten Umrichter, von der Getriebeübersetzung, von der Reibung in der Anlage, von der Geschwindigkeit, der Beschleunigungsstrecke, der Regelstrecke, dem Ausdrückergewicht und weiteren Parametern.

Diese Parameter haben zum Teil keinen linearen Zusammenhang. Zudem müssen die Parameter für jede Anlage vollständig neu eingepflegt werden, wobei Eingaben durch eine Bedienperson fehlerhaft sein können. Ein rein rechnerischer Ansatz ist äußerst aufwändig und das Ergebnis außerdem mit großen Toleranzen behaftet.

Die hier verwendete Lösung ist das vorstehend beschriebene Annäherungsverfahren:

Ziel ist die korrekte Einstellung des Servostroms und damit der Ausdrückkraft.

Weitere Ziele dieses und anderer Ausführungen können beispielsweise sein: die Unabhängigkeit einer Steuersoftware von der Getriebeübersetzung und anderen individuellen Anlageneigenschaften, eine hohe Genauigkeit und/oder beispielsweise eine Bedienerunabhängigkeit.

Zum Durchführen der Ermittlung wird zunächst ein Datensatz mit Grunddaten geschrieben, nämlich mit Positionen, Geschwindigkeiten, Freigaben, etc., wobei der Strom des Servomotors auf einen sehr kleinen Wert gesetzt wird. Der Ausdrückeroptimierungszyklus wird sodann gestartet.

Das Drehmoment wird überwacht. Wenn der Antrieb einen Fehler meldet, wird der Strom am Servomotor um eine bestimmte Schrittweise erhöht.

Irgendwann meldet der Antrieb keinen Fehler mehr. Es ist also nun bekannt, dass der Antrieb den Ausdrücker kontinuierlich nach vorne drücken kann. Dies ist der technisch erforderlich ermittelte Wert. Diesem wird ein Sicherheitsbeiwert hinzugefügt. Der ermittelte Wert wird gespeichert.

Ein weiteres Beispiel soll die Optimierung des Ablaufs an einem Vordehnstempel (VDS) beschreiben.

Bei geklemmter Folie drückt ein Servomotor den VDS vertikal in die Folie. Hierdurch wird mehr Folienmaterial in den Bodenbereich gebracht. Nach dem Aufschalten von Vakuum oder Druckluft fährt der VDS zurück.

Der VDS erleichtert somit das endgültige Dehnen der Folie in die gewünschte Form.

Der VDS soll bei geklemmter Folie eine gewisse Position erreicht haben.

Die Ansteuerung des VDS erfolgt jedoch über Servoumrichter, welche keine Bahnsteuerung besitzen. Die Servos der Tische und des VDS werden bei einer bestimmten Position gestartet. Sie fahren dann mit vorgegebenen Beschleunigungsrampen und Geschwindigkeiten das Ziel an. Die Ankunftszeit wird von der Steuerung zurückgemeldet.

Der Zusammenhang der Parameter ist abhängig von den geometrischen Verhältnissen, den Rampen, dem Schleppfehler, dem verwendeten Servomotor, dem verwendeten Umrichter, der Getriebeübersetzung, der Reibung in der Anlage, der Geschwindigkeit, der Beschleunigungsstrecke, dem Werkzeuggewicht und weiteren Parametern.

Die Startpositionen haben mit der Ankunftszeit keinen linearen, keine stetigen und keinen differenzierbaren Zusammenhang.

Auch hier ist die beste Lösung ein iteratives Regelverfahren.

Ziel des Verfahrens ist es hier, eine korrekte Einstellung des Stärtzeitpunktes zu finden, um den Ablauf und das Ergebnis zu optimieren.

Auch hier können weitere Ziele wie Anlagenunabhängigkeit bei unterschiedlichem Exzenterhub, eine möglichst hohe Genauigkeit oder eine Bedienerunabhängigkeit vorhanden sein.

Auch hier werden zunächst die Grunddaten und -positionen geschrieben. Anschließend wird der Zyklus in der Formstation gestartet.

In jedem Zyklus wird die Zeitdifferenz zwischen der VDS-Endposition und der Disposition gemessen. So lange die Zeitdifferenz über einen Schwellenwert hinausgeht, wird einem Wegunterschied ein bestimmter Wert zugewiesen, welcher sich aus einer Regelfunktion des Zeitunterschieds ergibt. Der neu zu laufende Weg ist somit die Differenz aus dem gemessenen Ist-Weg und der Weg der Differenz. Somit kann eine neue Soll-Winkel-Position errechnet werden, nämlich auf einer Geometrieberechnung des neuen Soll-Weges. Die neue Winkelposition für den Start wird nun in die Anlage geschrieben und der neue Takt durchlaufen. Hiermit beginnt der Optimierungszyklus von vorne.

Sobald die Zeitdifferenz unter einem vorgegebenen Schwellenwert liegt, wird die Winkelposition für den Start gespeichert.

In noch einem weiteren Beispiel sei ein Verfahren zum Ermitteln von Qualitätsoptima bei der Herstellung geformter Kunststoffteile erläutert:

In diesem Verfahren werden Maschineneinstellwerte (Parameter) unter Berücksichtigung frei wählbarer Qualitätskriterien ermittelt. In einem Ausführungsbeispiel kann durch Iteration die Bewegung der Maschine optimiert werden, um einen ruhigen, verschleißarmen Maschinenlauf zu gewährleisten. In Verbindung der Qualitätsoptimierung wird auf diese Weise ein Betriebspunkt gefunden, welcher ein Optimum im Hinblick auf Produktqualität und Ausstoßleistung darstellt.

So ist es beispielsweise hinsichtlich eines Parameters denkbar, dass sich bei seiner Variation eine Kurve mit einem Maximum ergibt, wenn über dem Parameter die erreichte Taktzahl aufgetragen wird. Beispielsweise kann sich eine Parabel oder eine ähnliche Kurve ergeben, welche bei einer bestimmten Einstellung des Parameters eine maximal erreichbare Taktung von beispielsweise 38 Takten pro Minute ergibt.

Hinsichtlich des gleichen Parameters kann sich ergeben, dass die erreichte Qualität, aufgetragen als Kurve über dem variierenden Parameter, ebenfalls ein Maximum annimmt, beispielsweise ebenfalls mit einem Kurvenverlauf in Form einer Parabel oder einer ähnlichen Kurve. Es ist beispielsweise denkbar, dass sich eine optimale Produktqualität bei einer Taktung von 15 Takten pro Minute ergibt.

Es kann hier beispielsweise als Optimum betrachtet werden, einen idealen Kompromiss aus der maximalen Ausstoßleistung und der bestmöglichen Qualität zu finden. Dieser Kompromiss kann beispielsweise bei einem Wert für den Parameter liegen, der zwischen demjenigen mit optimierten Ausstoß und demjenigen mit optimierter Qualität liegt, beispielsweise unterhalb einer Taktung von 24 Takten pro Minute.

Das Verfahren wird durchgeführt von einem Programm, der Maschinensteuerung oder selbständig auf einem externen Rechner. In letzterem Fall ist eine Datenkommunikation zwischen der Maschine und dem Optimierungsprogramm vorgesehen.

Der Ablauf ist wie folgt:

In einem ersten Schritt werden Produktparameter wie Folienmaterial, Foliendicke, Formteilabmessungen, Werkzeugabmessungen, etc. eingegeben. Die Eingabe der Produktparameter in die Maschinensteuerung kann manuell erfolgen oder durch Einlesen von CAD-Daten. Auch extern gespeicherte Daten sind denkbar. Störkanten des Werkzeugs oder des Produkts können berechnet oder optisch oder mechanisch ermittelt werden.

In einem zweiten Schritt wird ein fähiger Datensatz für die Maschineneinstellung ermittelt. Der Datensatz wird über eine hinterlegte Expertendatenbank ermittelt. Dies ist entweder Teil der Maschinensteuerung oder extern hinterlegt. Die Expertendatenbank kann vom Bediener oder extern erweitert werden. Mit diesem Datensatz wird die Versuchsdurchführung gestartet. Anstelle des Vorschlagswertes kann auch ein von der Bedienperson eingestellter oder ein bereits vorhandener Datensatz als Ausgangsbasis genommen werden.

In einem dritten Schritt wird mindestens ein Programmvorschlag ermittelt für mindestens einen zu variierenden Prozessparameter. Die Berechnung des Programmvorschlags erfolgt in einem Ausführungsbeispiel nach einer im Programm hinterlegten Methodik, bei welcher eine Versuchsplanung erstellt wird, welche statistisch aufgesetzt ist. Bei dieser statistischen Versuchsplanung wird mindestens ein Faktor verändert, vorzugsweise mehrere Faktoren gleichzeitig.

In einem vierten Schritt wird mindestens eine Zielgröße festgelegt, z. B. die Dickenverteilung, die Planlage, die Ausformung oder ähnliche Zielgrößen. Bei der Festlegung der Zielgröße kann es sich sowohl um messbare als auch um subjektiv bewertbare Größen handeln. Die Zielgrößen können wahlweise gewichtet werden. In einem anderen Ausführungsbeispiel können die Zielgrößen fest hinterlegt sein, so dass diese nicht frei wählbar sind.

In einem fünften Schritt wird ein Maschinenlauf durchgeführt. Hierbei wird mindestens ein Produktstapel produziert. Je nach Programmausführung wird entweder eine fest vorgegebene Anzahl von bewertbaren Stapeln produziert, oder die Anzahl der Stapel ist frei wählbar.

In der Praxis werden zunächst mehrere Produkte produziert, so dass sich die Maschinenparameter einpendeln können, bevor ein Stapel zum Bewerten entnommen wird. Um eine Verwechslung auszuschließen, können die Stapel gekennzeichnet werden. Dies kann beispielsweise mechanisch durch Bedruckung oder durch eine unterschiedliche Stapelhöhe erfolgen. Ferner ist ein akustisches oder optisches Signal denkbar, welches die Bedienperson zur Entnahme auffordert. Die zu bewertenden Stapel können auch durch ein Händlingsystem aussortiert und getrennt gestapelt werden.

In einem sechsten Schritt erfolgt eine Bewertung der Zielgrößen, gewichtet oder gleichmäßig verteilt, und die Eingabe in die Maschinensteuerung oder die externe Steuerung. Die Bewertung der Zielgröße erfolgt durch Messen oder nach subjektiven Kriterien. Beispielsweise können die Ausformung oder die Folientransparenz sehr leicht optisch bewertet werden.

In einem siebten Schritt erfolgen eine Datenauswertung und Berechnung mindestens eines qualitätsoptimierten Datensatzes. Die Bedienperson trifft die Auswahl des errechneten und vom Programm vorgeschlagenen optimierten Datensatzes und übernimmt den gewählten Datensatz zur Steuerung der Maschine.

In einem achten Schritt erfolgt optional eine Anpassung der verschiedenen Bewegungen nach einem iterativen Prozess. Bei dieser iterativen Anpassung werden die Bewegungen der Maschine so weit optimiert, bis ein Maschinenlauf zustande kommt, welcher eine höchstmögliche Geschwindigkeit bei höchstmöglicher Produktqualität zulässt. Darüber hinaus kann bei dieser Bewegungsoptimierung ein Betriebspunkt gefunden werden, bei welchem die Maschine verschleißarm betrieben werden kann.

In einem neunten Schritt erfolgt ein Verifizieren der gewählten Einstellungen durch weitere Testläufe. Die produzierten Produkte werden wieder bewertet. Die Produktion wird gestartet, die Qualitätsoptimierung wird wiederholt.

In einem zehnten Schritt wird nun die qualitätsoptimierte Produktion begonnen.

In einem elften Schritt erfolgt während der Produktion eine Qualitätskontrolle. Das Programm fordert den Bediener auf, verschiedene Produkte zu entnehmen, und gibt statistische Werte aus. Diese können zu anderen Datenverarbeitungsanlagen übertragen werden. Eine Optimierung während der Produktion und eine Überwachung der Qualität beispielsweise von Rohstoff, Halbzeugen und Störgrößen, beispielsweise an der Folie, ist ohne weiteres möglich.

## Patentansprüche

1. Verfahren zum Einstellen eines Parameters an einer kunststoffverarbeitenden Anlage, welche einen Thermoformprozess oder einen anderen Kunststofffügeprozess durchführt, wobei eine Produktionseinstellung des Parameters über einen in und/oder von der Anlage ermittelten Messwert iterativ ermittelt wird,
***dadurch gekennzeichnet, dass***
- in einem ersten Schritt eine Parametereingabe erfolgt,
- woraufhin in späteren Schritten zunächst ein Trockenlauf von Anlagenteilen,
- dann ein Anfahren in einem Sparmodus und
- schließlich ein Fahren der Anlage in einem Produktionsmodus durchgeführt werden,
wobei in den späteren Schritten jeweils eine Iteration durchgeführt wird und,
wobei der Parameter iterativ so eingestellt wird, dass sich eine Zykluszeit ergibt, welche größer ist als eine minimal mögliche Zykluszeit, welche aber eine bessere Produktqualität ergibt.

2. Verfahren nach Anspruch 1, ***dadurch gekennzeichnet, dass*** ein in einer Anlagensteuerung vorgesehener Versuchsplan verwendet wird.

3. Verfahren nach Anspruch 1 oder 2, ***dadurch gekennzeichnet, dass*** der Parameter beim iterativen Ermitteln selbständig durch eine Anlagensteuerung variiert wird.

4. Verfahren nach einem der vorhergehenden Ansprüche, ***dadurch gekennzeichnet, dass*** der Parameter beim iterativen Ermitteln einer Bedienperson vorgeschlagen wird.

5. Verfahren nach einem der vorhergehenden Ansprüche, ***dadurch gekennzeichnet, dass*** ein Foliendurchhang bei einer Berechnung an einer kunststoffverarbeitenden Anlage berücksichtigt wird.

6. Verfahren nach einem der vorhergehenden Ansprüche, ***dadurch gekennzeichnet, dass*** eine zu erreichende Qualitätszielgröße von einer Bedienperson eingegeben wird.

7. Verfahren nach einem der vorhergehenden Ansprüche, ***dadurch gekennzeichnet, dass*** beim iterativen Ermitteln des Parameters eine Qualitätszielgröße von einer Bedienperson bewertet wird.

8. Verfahren nach Anspruch 7, ***dadurch gekennzeichnet, dass*** anhand der bewerteten Qualitätszielgröße ein optimierter Datensatz errechnet wird.

9. Verfahren nach einem der vorhergehenden Ansprüche, ***dadurch gekennzeichnet, dass*** eine Maschinenbewegung durch die Iteration optimiert wird.

10. Verfahren nach einem der vorhergehenden Ansprüche, ***dadurch gekennzeichnet, dass*** eine Formzeit durch die Iteration optimiert wird.

11. Verfahren nach einem der vorhergehenden Ansprüche, ***dadurch gekennzeichnet, dass*** eine Anpresskraft durch die Iteration optimiert wird.

12. Verfahren nach einem der vorhergehenden Ansprüche, ***dadurch gekennzeichnet, dass*** eine Standzeit durch die Iteration optimiert wird.

13. Verfahren nach einem der vorhergehenden Ansprüche, ***dadurch gekennzeichnet, dass*** ein Überdruck von Pressluft durch die Iteration optimiert wird.

14. Verfahren nach einem der vorhergehenden Ansprüche, ***dadurch gekennzeichnet, dass*** zusätzlich zum iterativen Ermitteln des Parameters ein statistischer Versuchsplan verwendet wird, insbesondere ein Versuchsplan nach Taguchi.

15. Verfahren nach einem der vorhergehenden Ansprüche, ***dadurch gekennzeichnet, dass*** der einzustellende Parameter eine mechanische Maschineneinstellung an der kunststoffverarbeitenden Anlage ist, wobei die Anlage die Maschineneinstellung anhand eines Parameters selbsttätig vornimmt.

16. Verfahren nach Anspruch 15, ***dadurch gekennzeichnet, dass*** eine Spreizung an mehreren Stellen unabhängig selbsttätig eingestellt wird.

17. Kunststoffverarbeitende Anlage mit einer Steuerung zum Durchführen des Verfahrens nach einem der vorhergehenden Ansprüche.

## Claims

1. A method for adjusting a parameter on a plastic material processing installation, which executes a thermoforming process or another plastic material joining process, wherein a production adjustment of the parameter is iteratively determined by way of a measurement value determined in and/or by the installation,
**characterized in that**
- in a first step, a parameter input takes place,
- whereupon in later steps, a dry run of installation parts,
- followed by a start-up in a power-saving mode and
- finally an operation of the installation in a production mode is implemented, wherein the parameter is iteratively adjusted in a manner resulting in a cycle time that is greater than a smallest possible cycle time but which results in a better product quality.

2. The method according to claim 1, ***characterized in that*** an experimental design, provided in an installation control system, is used.

3. The method according to claim 1 or 2, ***characterized in that*** the parameter is autonomously varied by an installation control system during iterative determination.

4. The method according to one of the afore-mentioned claims, ***characterized in that*** the parameter is proposed to an operator during iterative determination.

5. The method according to one of the afore-mentioned claims, ***characterized in that*** sagging of the film is taken into account when making a calculation in a plastic material processing installation.

6. The method according to one of the afore-mentioned claims, ***characterized in that*** a quality target value to be achieved is input by an operator.

7. The method according to one of the afore-mentioned claims, ***characterized in that*** during iterative determination of the parameter, a quality target value is assessed by an operator.

8. The method according to claim 7, ***characterized in that*** an optimized data set is calculated with the aid of the assessed quality target value.

9. The method according to one of the afore-mentioned claims, ***characterized in that*** a machine movement is optimized by the iteration.

10. The method according to one of the afore-mentioned claims, ***characterized in that*** a forming time is optimized by the iteration.

11. The method according to one of the afore-mentioned claims, ***characterized in that*** a contact pressure is optimized by the iteration.

12. The method according to one of the afore-mentioned claims, ***characterized in that*** an immobilisation time is optimized by the iteration.

13. The method according to one of the afore-mentioned claims, ***characterized in that*** an overpressure of pressurized air is optimized by the iteration.

14. The method according to one of the afore-mentioned claims, ***characterized in that*** a statistical experimental design, more specifically an experimental design according to Taguchi, is used in addition to the iterative determination of the parameter.

15. The method according to one of the afore-mentioned claims, ***characterized in that*** the parameter to be adjusted is a mechanical machine setting in the plastic material processing installation, wherein the installation autonomously carries out the setting of the machine based on a parameter.

16. The method according to claim 15, ***characterized in that*** a spread in several places is adjusted independently and autonomously.

17. A plastic material processing installation with a control system for implementing the method according to one of the afore-mentioned claims.

## Revendications

1. Procédé de réglage d'un paramètre dans une installation de traitement de matières plastiques mettant en oeuvre un processus de thermoformage ou un autre processus d'assemblage de matières plastiques, où un réglage de production du paramètre est déterminé via une valeur mesurée, déterminée de manière itérative dans et/ou par l'installation,
***caractérisé en ce que***
- dans une première étape, un paramètre est saisit,
- après quoi, lors d'étapes ultérieures, une marche à sec de parties de l'installation est mise en oeuvre dans un premier temps,
- suivie d'un démarrage dans un mode économique et
- enfin d'un fonctionnement de l'installation dans un mode de production,
où, une itération est effectuée à chaque étape ultérieure et,
où le paramètre est réglé itérativement de telle manière qu'il en résulte un temps de cycle supérieur au temps de cycle minimal possible, mais résultant en une meilleure qualité du produit.

2. Procédé selon la revendication 1, ***caractérisé en ce qu'***est utilisé un plan d'expérience prévu dans un système de commande de l'installation.

3. Procédé selon la revendication 1 ou 2, ***caractérisé en ce que*** le paramètre est varié de manière autonome par un système de commande de l'installation lors de la détermination itérative.

4. Procédé selon l'une quelconque des revendications précédentes, ***caractérisé en ce que,*** lors de la détermination itérative, le paramètre est proposé à un opérateur.

5. Procédé selon l'une quelconque des revendications précédentes, ***caractérisé en ce qu***'un affaissement du film est pris en compte lors d'un calcul dans une installation de traitement de matières plastiques.

6. Procédé selon l'une quelconque des revendications précédentes, ***caractérisé en ce* qu'**une valeur cible de qualité à atteindre est réglée par un opérateur.

7. Procédé selon l'une quelconque des revendications précédentes, ***caractérisé en ce que*** lors de la détermination itérative du paramètre, une valeur cible de qualité est estimée par un opérateur.

8. Procédé selon la revendication 7, ***caractérisé en ce qu***'un ensemble de données optimisé est calculé à l'aide de la valeur cible de qualité estimée.

9. Procédé selon l'une quelconque des revendications précédentes, ***caractérisé en ce qu***'un mouvement de machine est optimisé par l'itération.

10. Procédé selon l'une quelconque des revendications précédentes, ***caractérisé en ce qu***'un temps de formage est optimisé par l'itération.

11. Procédé selon l'une quelconque des revendications précédentes, ***caractérisé en ce* qu'**une force de contact est optimisée par l'itération.

12. Procédé selon l'une quelconque des revendications précédentes, ***caractérisé en ce qu'***un temps d'arrêt est optimisé par l'itération.

13. Procédé selon l'une quelconque des revendications précédentes, ***caractérisé en ce* qu'**une surpression de l'air pressurisé est optimisé par l'itération.

14. Procédé selon l'une quelconque des revendications précédentes, ***caractérisé en ce** qu***'en** plus de la détermination itérative du paramètre, un plan d'expérience statistique est utilisé, en particulier un plan d'expérience selon Taguchi.

15. Procédé selon l'une quelconque des revendications précédentes, ***caractérisé en ce que*** le paramètre à régler est un réglage mécanique d'une machine dans l'installation de traitement de matières plastique, où l'installation procède au réglage de la machine à l'aide d'un paramètre de manière autonome.

16. Procédé selon la revendication 15, ***caractérisé en ce qu***'un écartement est réglé en plusieurs endroits, de manière indépendante et autonome.

17. Installation de traitement de matières plastiques avec un système de commande pour l'exécution du procédé selon l'une quelconque des revendications précédentes.
